# EUROPEAN PATENT SPECIFICATION

(11) **EP 0 926 769 B1**
(45) Date of publication and mention of the grant of the patent: **02.05.2007**
(21) Application number: 98403249.0
(22) Date of filing: 22.12.1998
(51) Int. Cl.: H01R 13/24, H01R 13/41, G06K 7/00

(54) **Very thin electrical connector for the connection of a smart card**
Sehr dünner elektrischer Verbinder für Chipkartenverbindung
Connecteur électrique très mince pour connecter une carte à puce

(30) Priority: 26.12.1997 FR 9716565
(43) Date of publication of application: 30.06.1999
(73) Proprietor: ITT MANUFACTURING ENTERPRISES, INC., Wilmington, Delaware 19801 (US)
(72) Inventor: Bricaud, Hervé, 39100 Dole (FR); Valcher, Fabrice, 39500 Damparis (FR)
(74) Representative: Kohn, Philippe

(56) References cited:
- FR-A- 2 714 539
- FR-A- 2 733 358
- FR-A- 2 747 847
- US-A- 5 527 192

## Description

The present invention relates to an electrical connector, especially for connecting a contact-type integrated-circuit card, also called a smart card or a chip card, having, on one of its main faces, a plurality of electrical contact areas which are aligned parallel to the direction of insertion of the card into a read/write apparatus.

The invention relates more particularly to an electrical connector of the type comprising a support made of insulating material produced by moulding, having an upper plane contact face and a plurality of parallel electrical conductors in the form of elastically deformable blades which extend longitudinally and each of which comprises a first, curved front contact end projecting out of the plane of the plane contact face through a longitudinal slot in the support, a middle portion for connecting the blade to the support, the front part of which extends partly in the slot and the rear part of which extends in a housing formed in the lower face of the support, and a second, rear connection end of the blade, of the type in which each blade includes, near its rear end, means for fastening the blade to the support which consist of at least one lateral retention tab which extends parallel to the middle connection part and which is housed in a complementary housing of the support into which the tab is inserted longitudinally from the rear to the front in order to mount the contact blade on the support.

Such an example of a connector is described, for example, in French Patent Application No. 93/15633 or in document WO-A-96/33527.

The design of the retention means proposed in these documents makes use of a harpoon-shaped retention tab and, if required, the use of at least one other lateral tab for stabilizing.

The object of the invention is to provide a novel connector of the aforementioned type which is characterized by a very small total thickness, i.e. between the plane of the upper face of a printed-circuit board to which the connector is soldered and the plane on which the smart card rests, i.e. the plane of the upper plane contact face of the insulating support, this thickness being less than 0.4 mm, while the minimum thickness of the connectors known hitherto is greater than 1 mm.

This very small thickness is required by the new developments in applications making use of smart cards, such as radio telephones, electronic purses, etc., which require very small overall sizes in order to be able, for example, to fit into a shirt pocket and which require external miniaturization of the various components.

In the case of the smart-card reader in particular, it is the total thickness of the equipment which is key, thereby resulting in the need to produce a connector which is very thin but which retains the characteristics of connectors currently on the market, i.e.:
- a value of the force with which the contacts bear on the conducting pads or tracks of the card approximately equal to 0.4 N per contact;
- a contact deflection travel in the working position of about 0.6 mm;
- the possibility of using the technique of surface-mounting the components in order to place the connector on the printed-circuit board using the pick-and-place technique; and
- the possibility of surface mounting with soldering using the reflow process (for example using infrared reflow), i.e. making use of high temperatures of about 240°C.

The object of the design according to the invention is also to provide a connector of conventional general design, i.e. a connector retaining an insulating support which carries the contacts. This is because the insulating support is a main element, preventing it from being eliminated, for example using a solution consisting in individually soldering the contacts to the printed-circuit board, and it cannot therefore be considered as a secondary element of the connector providing a simple function of connection between contacts. The support has a function of mechanically protecting the contacts, it allows precise positioning of the contacts on the printed-circuit board and, finally, it has an aesthetic function.

To this end, the invention provides an electrical connector as defined in claim 1, characterized in that each blade includes, near its rear connection end, further retention tabs extending transversely to the blade, and in that each free end of the retention tabs has a S-shaped bent portion extending in an associated complementary housing formed in the insulating support by the use of bayonet-type means providing the downward vertical retention and longitudinal positioning of each electrical conductor with respect to the insulating support.

According to other characteristics of the invention:
- each lateral retention tab has a front branch and a rear branch, the ends of which are each housed in a housing which is open in the upper face of the insulating support and open longitudinally towards the rear and into which housings the branches can be inserted longitudinally towards the front;
- the front branch of each retention tab extends longitudinally towards the front in the plane of the rear part of the middle connection portion and is then bent upwards so that its front free end extends into the associated housing;
- the front end transverse edge of the front branch of the retention tab engages with a front stop transverse surface of the housing;
- the rear end transverse edge of the front branch of the retention tab engages with a rear stop transverse surface arranged in a housing formed in the lower face of the insulating and vertically downwardly open support in which the rear part of the middle connection portion of the contact blade and a rear part of the front branch extend;
- the rear branch of each retention tab extends transversely in the plane of the rear part of the middle connection portion and is then bent upwards so that its transverse free end extends into the associated housing;
- the free ends of the front branches, which exhibit transverse resilience, of the retention tab are mounted clamped transversely in their associated complementary housings;
- each electrical conductor has a symmetry of design with respect to a longitudinal mid-plane of the contact blade;
- the lower face of the rear connection end of each blade lies above the plane of the lower bearing face of the support;
- one of the electrical conductors has, near the curved front free contact end of its contact blade, an additional, switching contact blade which extends longitudinally from the curved contact end and which, in the working position of the contact blade, can engage with a conducting track of a printed-circuit board on which the connector is mounted in order to close an electrical switching circuit for detecting the presence of a card in an apparatus equipped with the connector and/or the end of insertion travel of the card;
- the free end of the switching blade lies vertically below the upper face of the curved contact end;
- the front contact end of the contact blade of the said conductor is divided into two parallel strands between which the switching blade extends.

Other characteristics and advantages of the invention will appear on reading the following detailed description for the understanding of which reference will be made to the appended drawings in which:

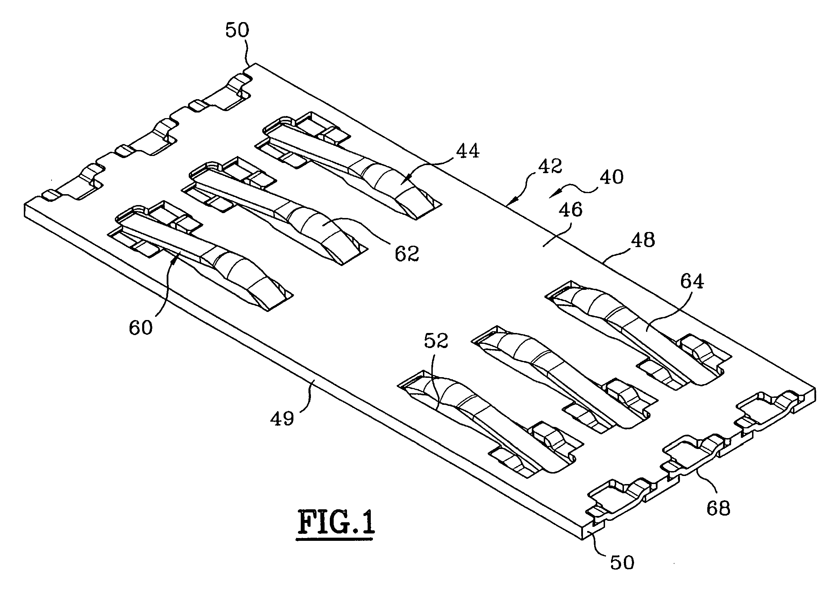

- Figure 1 is an isometric perspective top view of an embodiment of a connector according to the teachings of the invention;

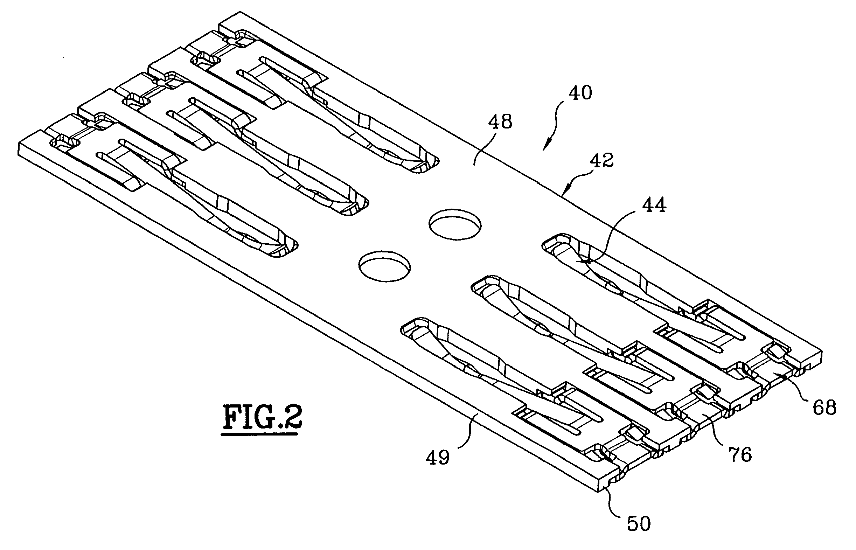

- Figure 2 is a perspective isometric bottom view of the connector of Figure 1;
- Figure 3 is an exploded view of the seven components of the connector of Figure 1;
- Figure 4 is an isometric perspective top view of the insulating support of the connector;
- Figure 5 is a view on a larger scale of the detail D5 in Figure 4;
- Figure 6 is an isometric perspective bottom view of the insulating support of the connector;
- Figure 7 is a view on a larger scale of the detail D7 in Figure 6;

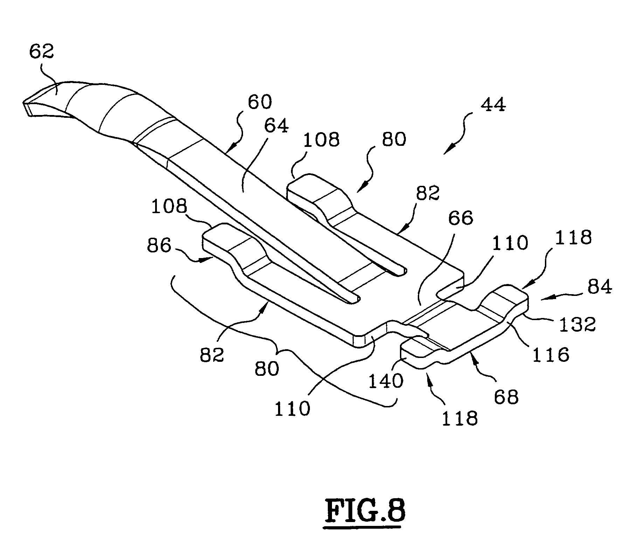

- Figure 8 is an isometric perspective top view on a large scale of a conducting element or contact of the connector;

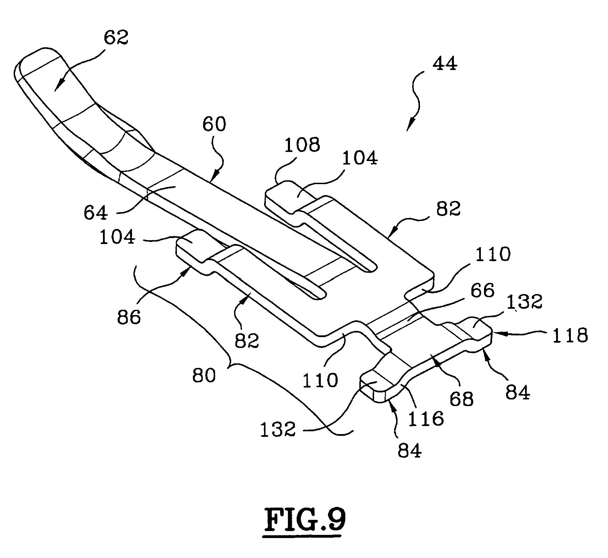

- Figure 9 is an isometric perspective bottom view of the contact in Figure 8;
- Figure 10 is a side view on a large scale of a contact with its manufacturing edge;
- Figure 11 is a top view of Figure 10;
- Figure 12 is a left side view of Figure 10;
- Figure 13 is a longitudinal sectional view of the connector in Figure 1 passing through the tabs for retaining the aligned contact blades;
- Figure 14 is a view on a larger scale of the detail D14 in Figure 13;
- Figure 15 is a longitudinal sectional view of the connector in Figure 1 passing through the longitudinal mid-axis of the aligned contact blades;
- Figure 16 is a view on a larger scale of the detail D16 in Figure 15;
- Figure 17 is an exploded perspective view, similar to that in Figure 3, which illustrates the contacts with their manufacturing ends and which illustrates the mounting of the contacts in the insulating support by longitudinal insertion;
- Figure 18 is an isometric perspective top view of an alternative embodiment of the connector according to the teachings of the invention, which includes a hybrid contact which also fulfils the function of a switch for detecting the presence of a card;
- Figure 19 is a view on a larger scale of the detail D19 in Figure 18;

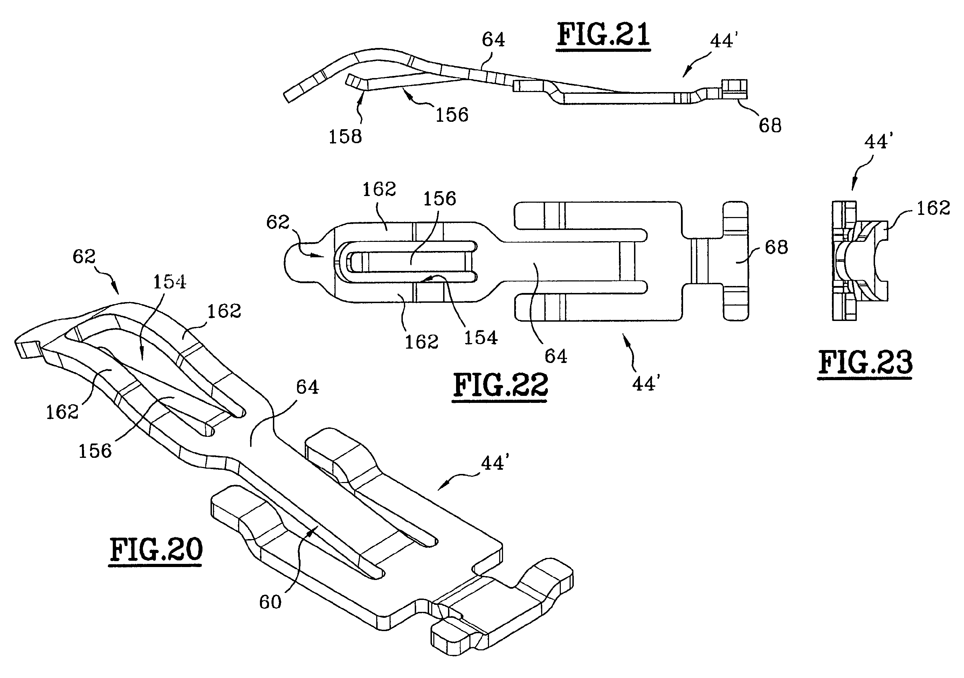

- Figure 20 is an isometric perspective view on a large scale of that one of the contacts of the connector in Figure 18 which provides the function of a switch for detecting the presence of a card;
- Figure 21 is a side view of the contact in Figure 20;
- Figure 22 is a top view of Figure 21;
- Figure 23 is a left side view of Figure 22;
- Figure 24 is a partial top view on a larger scale of the connector in Figure 18 in which the contact is in the rest position;
- Figure 25 is a detailed sectional view on the line 25-25 in Figure 24;
- Figures 26 and 27 are views similar to those in Figures 24 and 25 in which the switch-forming contact is illustrated in the working position;
- Figure 28 is a perspective bottom view of a printed-circuit board equipped on its upper face with the connector illustrated in Figure 18;
- Figure 29 is a view on a larger scale of the detail D29 in Figure 28;
- Figure 30 is a top view of the printed-circuit board in Figure 28;
- Figure 31 is an isometric perspective top view of the insulating support of the connector in Figure 18;
- Figures 32 to 35 are views similar to those of Figures 20 to 23 which illustrate an alternative embodiment of the hybrid contact fulfilling the function of a switch for detecting the presence of a card; and
- Figure 36 is a view similar to that in Figure 27 illustrating the contact in Figure 32 in the working position.

The figures illustrate an electrical connector 40 of known general design which essentially consists of a plate-shaped insulating support 42 and of a series of conducting elements or contacts 44 which, in the example illustrated in the figures, number six, these being in the form of three pairs of aligned contacts mounted back to back on the support 42.

The insulating support 42 is a plate of insulating material delimited by a plane upper face 46, also called the contact face, and by a plane lower face 48 parallel to the upper face 46, which is also called the bearing face of the connector 40.

The plate forming the insulating support 42 has a rectangular outline and is especially delimited by two longitudinal edges 49 and by two transverse edges 50.

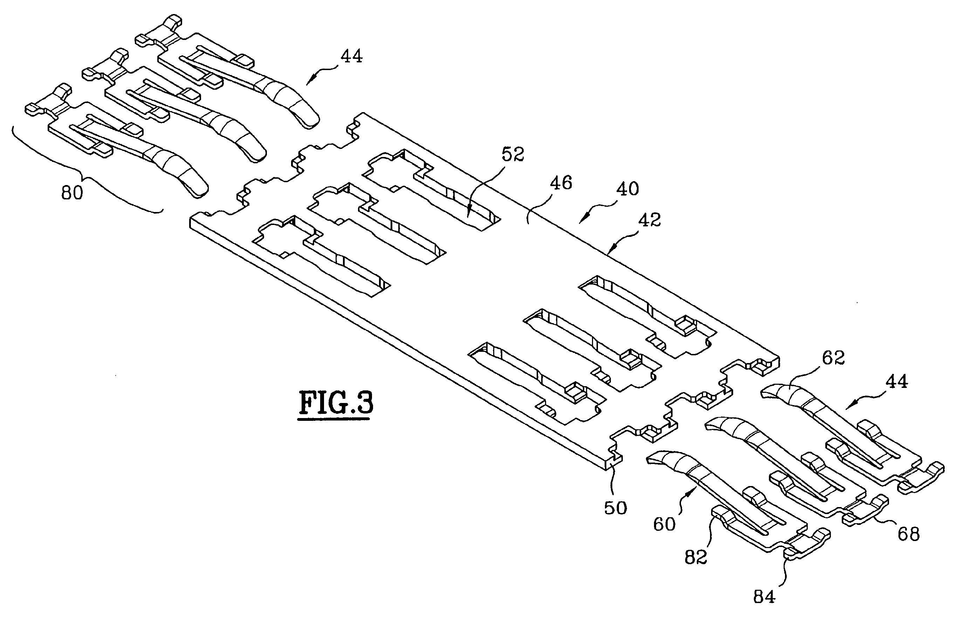

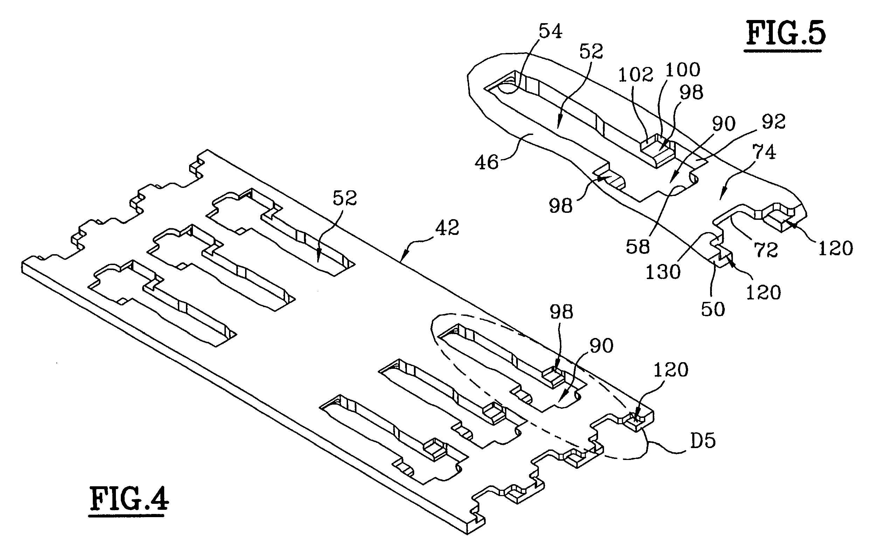

As may be seen especially in Figures 3 to 7, the insulating support 42 has a series of six slots 52 which are emerging slots of longitudinal orientation, each of which allows, according to a known design, passage of the main part of each contact element 44.

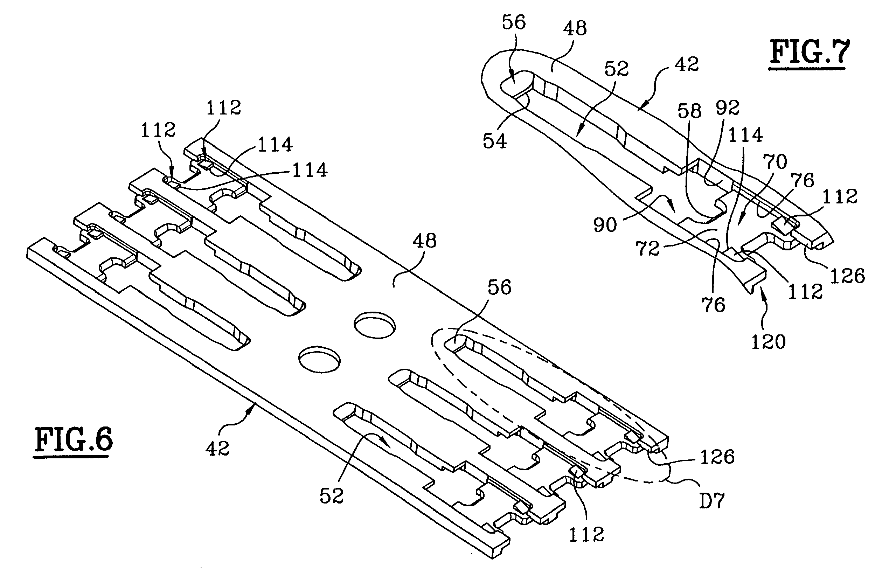

Each slot 52 is delimited longitudinally towards the front by a transverse edge 54 which includes a recess 56 in the lower face 48, as may be seen in Figure 7.

Each slot 52 is also delimited longitudinally towards the rear by a rear transverse edge 58.

According to a known design, each contact element 44 essentially consists of an elastically deformable contact blade 60 of longitudinal general orientation which has a first, front free end 62 which is curved and which, in the rest position illustrated in the figures, projects vertically above the upper face 46 of the insulating support 42 so as to come into contact with conducting pads on the chip of a smart card (not shown), the connector 40 of which provides connection to a read/write apparatus.

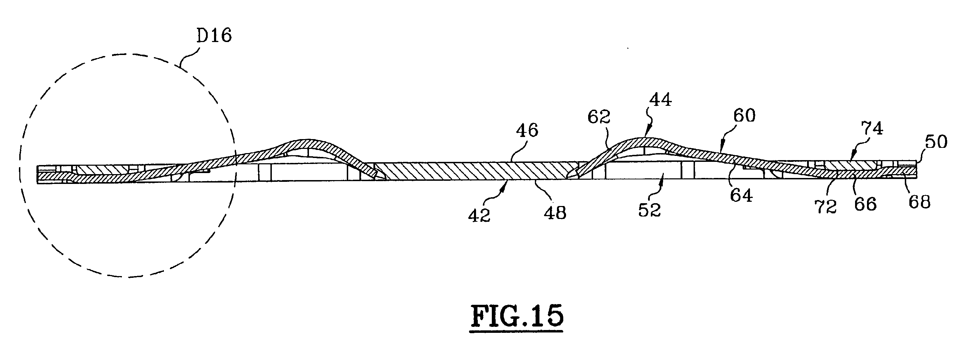

The front free end 62 is extended by a middle connection part, the front part 64 of which extends in the slot 52 and the rear part 66 of which extends in the thickness of the support plate 42, as may be seen in particular in Figure 15, in order to be terminated in a rear free end 68 of the contact blade 60 which is its end for electrical connection to a circuit carried by a printed-circuit board.

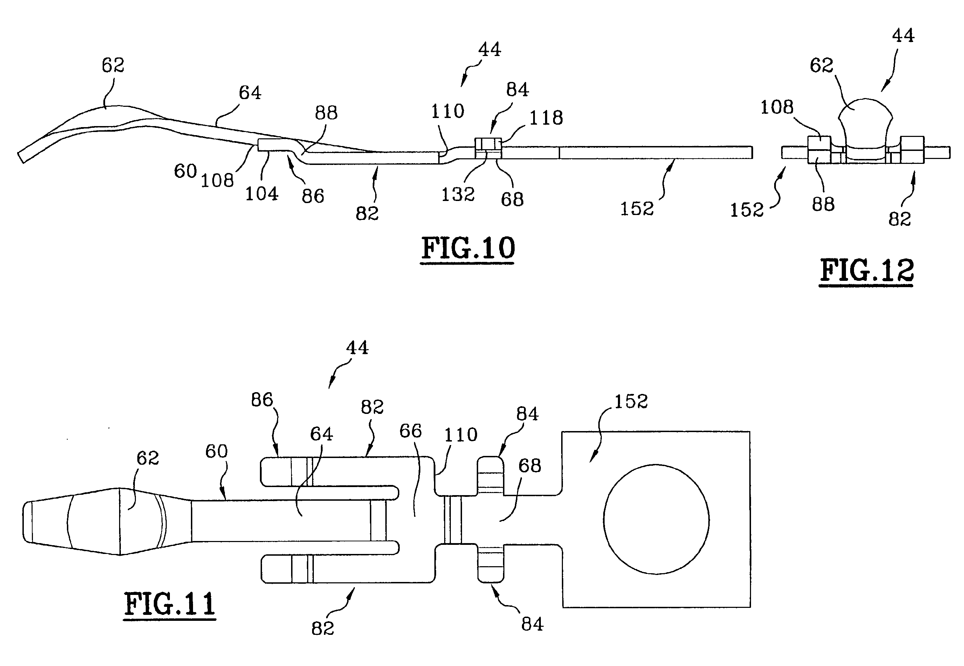

As may be seen especially in Figures 10 and 15, the blade 60, which has a constant thickness, is bent at rest so that the front part 64 of its middle connection portion is inclined upwards in order to extend through the slot 52 and so that the rear part 66 is plane and parallel to the faces 46 and 48.

More specifically, the part 66 extends in a housing 70 formed in the lower face 48 of the support 42 which is open vertically downwards in the lower face 48 and which is delimited vertically upwards by the lower face 72 of a plate-shaped thin part 74 of the insulating support 42.

The open housing 70 is also delimited laterally by two opposed transverse edges 76 which are separated by a distance significantly greater than the average width of the slot 52.

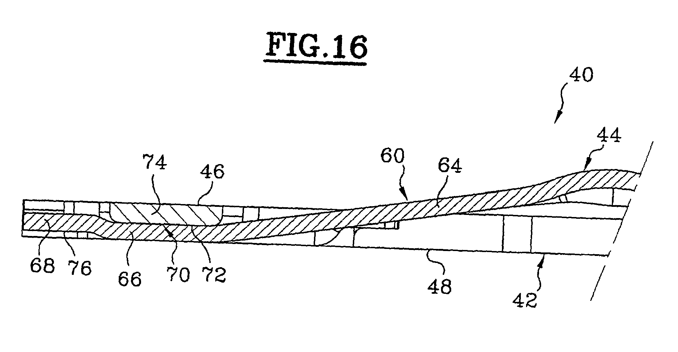

As may be seen especially in Figures 15 and 16, the height of the housing 70 is approximately equal to the thickness of the material of which the contact 44 is composed, and therefore of the part 66 of the blade 60.

As may be seen in particular in Figure 16, the lower face of the rear connection end 68 extends horizontally parallel to the faces 46 and 48, but it is slightly raised with respect to the part 66 so that its lower face 76 lies above the plane of the lower bearing face 48 of the support 42, for example with an offset of 0.07 mm, in order to absorb the thickness of the weld and of the pad on the printed-circuit board necessary for connecting each rear connection end 68, while the lower face 48 continues to bear on this plate.

The fact that the rear part 66 of the middle connection portion of a blade 60 extends below the thinned part 74 of the insulating support 42 which upwardly delimits the housing 70 ensures upward vertical retention of the contact 44 in the support 42.

The retention means, of the bayonet type, of each contact 44 providing the downward vertical retention and longitudinal positioning of each contact 44 with respect to the insulating support 42 will now be described.

As may be seen in the various figures, each contact 44 has a symmetry of design with respect to a vertical longitudinal mid-plane of the contact blade 60.

The means for fastening and retaining each contact 44 thus consist of two retention tabs 80 arranged symmetrically on each side of a contact blade 60, each of which tabs has two branches, i.e. a front branch 82 and a rear branch 84.

Each front branch 82 extends longitudinally along the front part of the middle connection portion, in the plane of the rear part 66 and beneath the lateral parts of the lower face 72 of the part 74 of the support 42 which delimits the housing 70, and its front free end 86 is offset vertically upwards.

For this purpose, the front branch 82 has, in its front part, an S-shaped bend 88 which extends through an emerging opening 90 which is open laterally in the extension of the slot 52 and which is delimited laterally towards the outside by an edge 92 which lies in the extension of the edges 76 of the lower housing 70.

The front free end 86 of the front branch 82 extends above a thinned lower portion 94 of the insulating support, this portion being delimited by an upper face 96 which is the bottom of an open housing 98 in the upper face 46 which lies in the extension of the passage 90 and which is delimited by a lateral face 100 and by a front end transverse face 102. The housing 98 is also open longitudinally towards the rear.

The thickness of material of the thinned portion 94 is equal to the thickness of material of the thinned portion 74, this thickness corresponding to the thinnest portions of the support 42 made of insulating material.

The front free ends 86 of the front branches 82 of the retention tabs 80 thus constitute lips or catches which retain, vertically downwards, the tabs 80 and therefore the contact 44 insofar as their lower facets 104 bear vertically against the bottoms 96 of the housings 98.

The front ends 86 also make it possible, by means of their front transverse facets 108, to form longitudinal stops towards the front of the contact 44 since they come into abutment with the facets 102 of the housings 98.

The front branches 82 are long enough to have a certain transverse resilience which allows the contact 44 to be mounted slightly clamped transversely between the lateral faces 100.

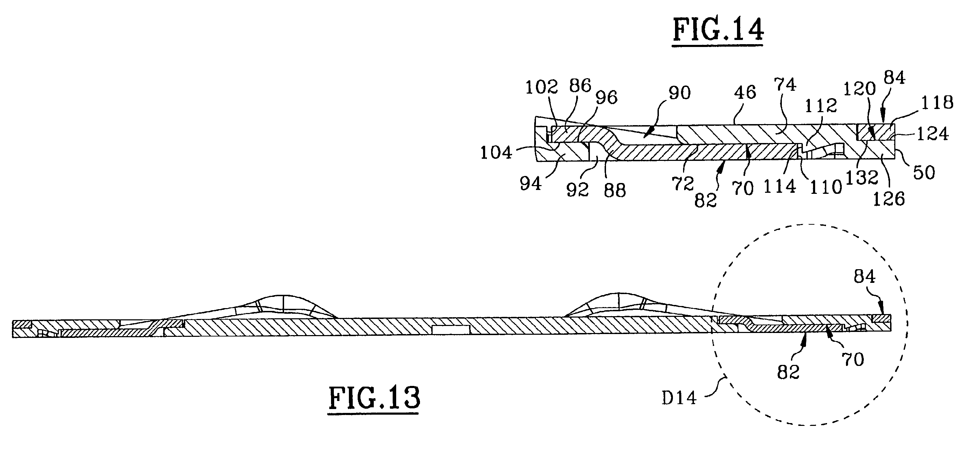

Each front branch 82 of the retention tabs 80 is delimited longitudinally towards the rear by a rear transverse edge 110 which, in the mounted position and as may be seen in particular in Figure 14, extends opposite the facing face of a ramp-type catch 112 formed so as to project from the lower face 72 of the housing 70.

This engagement of the transverse faces 110 with the front transverse faces 114 of the catches 112 ensures longitudinal retention towards the rear of the contact 44, the sloping profile making it easier to insert each contact.

In order to provide bayonet-type mounting of each contact 44, each retention tab 80 has a rear branch 84 which extends transversely, from the rear connection end 66, in the same plane as the latter, and which is then raised by virtue of an S-shaped bent portion 116 so that the lateral free end 118 of each rear branch 84 extends in a housing 120 formed in the upper face 46 near the rear transverse edge 50 of the insulating support.

Each housing 120 is, open in the upper face 48, delimited downwards by an upper facet 124 which delimits upwards a thinned rear portion 126 of the support and which is delimited transversely towards the front by a front end edge 130.

It is the lower face 132 of the free end 118 of the rear branch 84 which bears against the facet 124 and the fact that the housings 120 are open longitudinally towards the rear in the edges 50 makes it possible to insert the ends 118 longitudinally forwards into the housings 120.

The ends 118 also engage via their lateral facets 140, in the correct position of each contact 44, since they are housed with a sliding fit between the facing lateral edges of the housings 120.

The geometry and the dimensions of the retention branches 80 of each contact 44 are defined so as to ensure good transverse and vertical stability and to avoid any forward transverse rocking phenomenon of the region for retaining the contact 44 due to the effect of the moment exerted by the bearing force of the contact 44 on the smart card when the latter is in place.

The curved free end 62 of each blade 44 bears lightly against the bottom of the recess 56 formed in the lower face 48 at the front end of the slot 52 in order to provide mechanical protection of the contact (when the card C slides longitudinally, in order to avoid the front transverse edge of the card butting up against the front end of the second row of contacts) or protection against attempts to break in, as well as when the card is handled awkwardly or when it is inserted parallel to its plane but in the transverse direction.

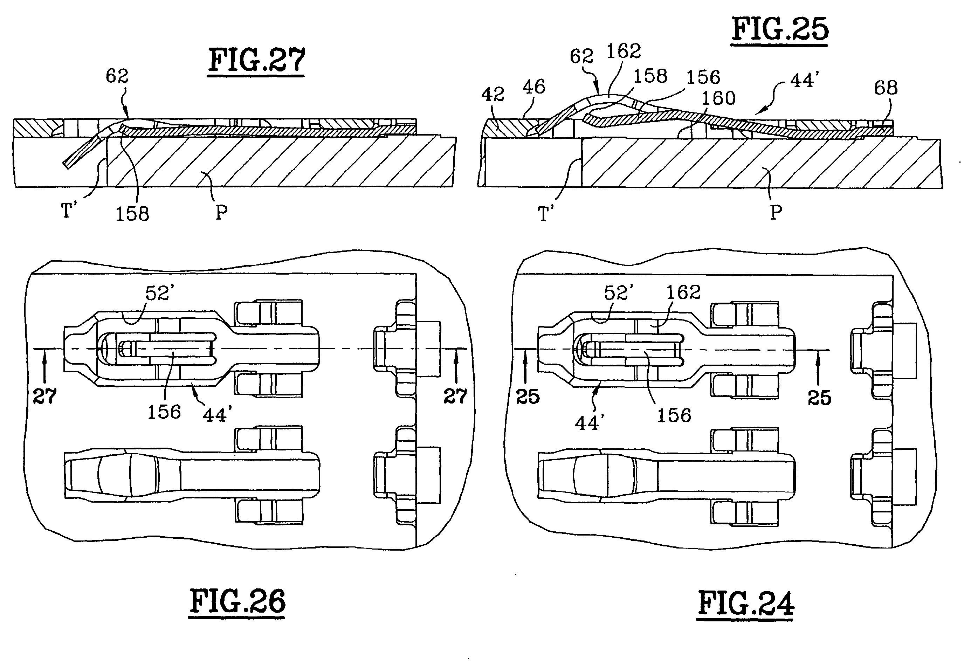

Because of this arrangement and of the small total thickness of the connector, it is necessary to produce holes in the printed-circuit board P (see Figures 25 and 27) in order to allow vertically downward retraction of the front ends 62 in the working position.

As may be seen in the figures, the geometry of the support plate 42 made of insulating material is particularly simple and its thinnest parts are not less than 0.2 mm, by virtue of the chicane- or bayonet-type mounting principle, that is to say that they are not less than the minimum thickness allowing good filling of the manufacturing moulds and having sufficient mechanical strength.

The design of the support 42 in the form of a thin piece having a constant thickness gives it optimum mechanical moulding characteristics, i.e. having no internal residual stresses, and therefore being dimensionally very stable during the high-temperature reflow operations for soldering a connector using the technique of surface-mounting the components on a printed-circuit board P.

The support 42 also has sufficient flexibility which ensures that the connector is very robust when it is soldered to a printed-circuit board P, even when this board is subjected to torsional or deformational movements.

The amount of material necessary for producing the support 42 is very small, thereby allowing the use of plastics having a high mechanical performance without increasing the cost of the piece.

The fact of using two symmetrical lateral retention tabs 80 ensures that the contacts 44 are very stable in the insulating support 42 so as to ensure that the contacts 44, once the connector 40 is soldered to the printed-circuit board P, are correctly positioned and very stable and to prevent the bearing forces of the contacts from being supported by the soldered joints of the connection ends 68.

The contacts 44 are fitted, by insertion into the insulating support, in the following manner.

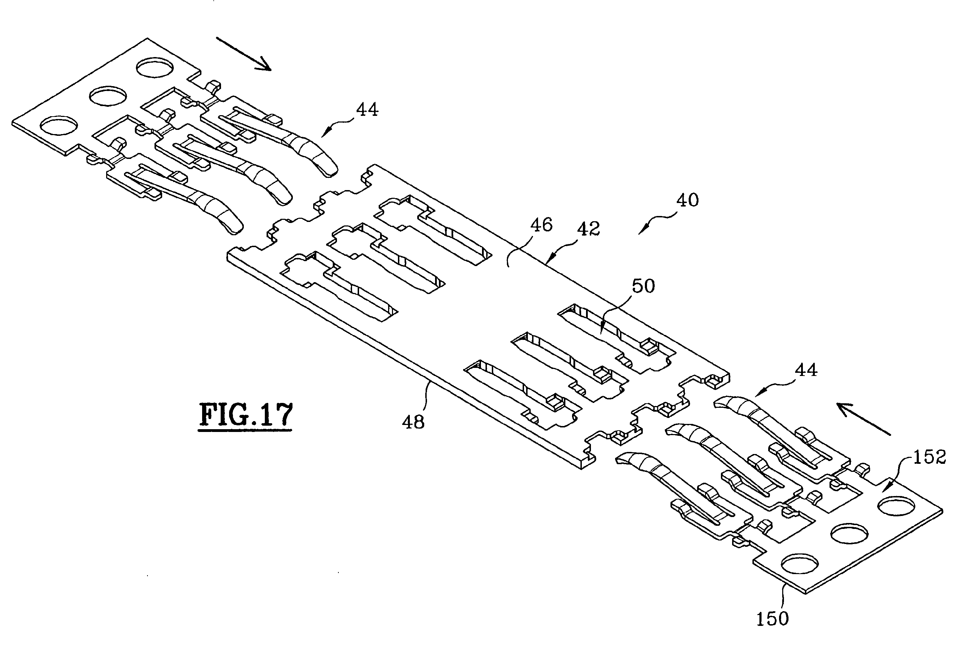

As may be seen in Figure 17, the contacts 44 are produced by cutting and bending a sheet of electrically conducting material 150, a portion 152 of which constitutes the connecting end for the contacts 44 which are combined in series of three contacts in order to allow them to be inserted simultaneously into the support 42 in the longitudinal direction from the rear to the front.

The assembly operation is carried out in the following manner.

The two series of three contacts are positioned beneath the lower face 48 of the insulating support 42 so that the front ends 86 of the front branches 82 of the retention tabs 80 lie below the housings 90.

The two series of three contacts are then raised vertically upwards so as to bring the parts 66 of the contacts 44 to press vertically upwards against the surfaces 72.

Finally, the two rows of contacts are then moved forward longitudinally towards the centre of the connector 40 until the contacts are snap-fastened into the mounted position, that is to say by the transverse ends 110 of the front branches 82 of the retention tabs 80 getting past the catches 112.

Next, the ends 152 are separated from the contacts 44.

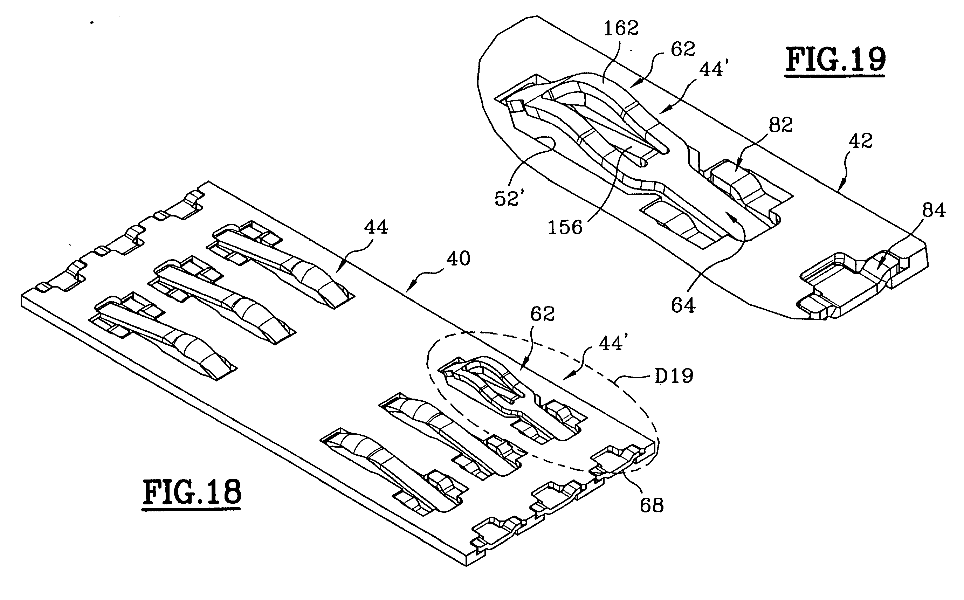

The alternative embodiment illustrated in Figures 18 et seq., in which components identical or similar or equivalent to those described and illustrated previously are denoted by the same reference numbers, will now be described.

As may be seen in Figures 18 and 19, the front end part or contact part 62 of one 44' of the six electrical contacts 44 with which the connector 40 is equipped has a structure different from that of the five other contacts described previously.

This is because this particular contact is a hybrid contact making it possible to form two separate semi-permanent electrical contacts having a common output 68 connected to a conducting track on the printed-circuit board P on which the connector 40 is mounted.

Beyond its front end contact part 62, the contact 44' is in all aspects identical to the other contacts 44, especially with regard to its rear connection and retention part.

The first contact provided with a pad on the smart card is conventionally made by the convex front end part 62 which here is divided into two parallel branches 162 which correspond to a fork-shaped division of the front end part 62 and which delimit, between them, a slot 154 into which an additional switching contact branch 156 extends, the latter extending in the extension of the middle connection portion 64.

Whereas the convexity of the two front free contact end branches 162 face upwards, the branch 156 has, at its free end 158, a convexity facing downwards and it extends generally downwards making an acute angle with respect to the general direction of the middle connection portion of the blade 60.

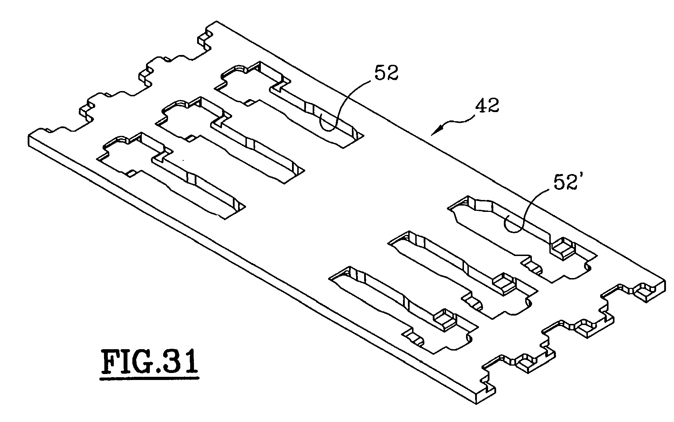

The division of the front end part 62 into two parallel strands 162 requires, of course, that the dimensions of the slot 52' be increased, as may be seen in particular in Figures 24, 26 and 31.

In the rest position, and as may be seen in Figure 25, the switching contact blade or branch 156 extends vertically above the upper face 160 of the printed-circuit board P which may include, opposite it, a conducting track 162 associated with the switching function.

When a smart card (not shown) is inserted horizontally, that is to say parallel to the plane of the connector and of the card, the edge of this card makes the contacts 44 of the first row of contacts of the connector 40 flex by engaging with the sloping shape of the middle connection part 64 and then makes the contacts of the second row flex by engaging with the sloping shape of the ends 62 of the contacts 44.

As may also be seen in the figures, the free end 158 of the switching blade 156 always lies vertically below the level of the strands 162, at least until the free end of the branch 156 reaches a level below the plane of the upper face 46 of the insulating support 42.

This is because it is important for this end always to be below the plane of the card so that the latter does not run the risk of catching on this end by one of its edges should it be inserted parallel to its plane.

With regard to the contact 44', the card, causing a downward vertical deflection of the front free end 62, 162, also causes (at the end of insertion travel or installation) the switching blade 156 to flex vertically downwards, the free end 158 of which switching blade comes into contact with the track 162 in order to close the switch electrically, that is to say to establish an electrical connection between the track 162 and the solder pad to which the rear connection end 68 is soldered.

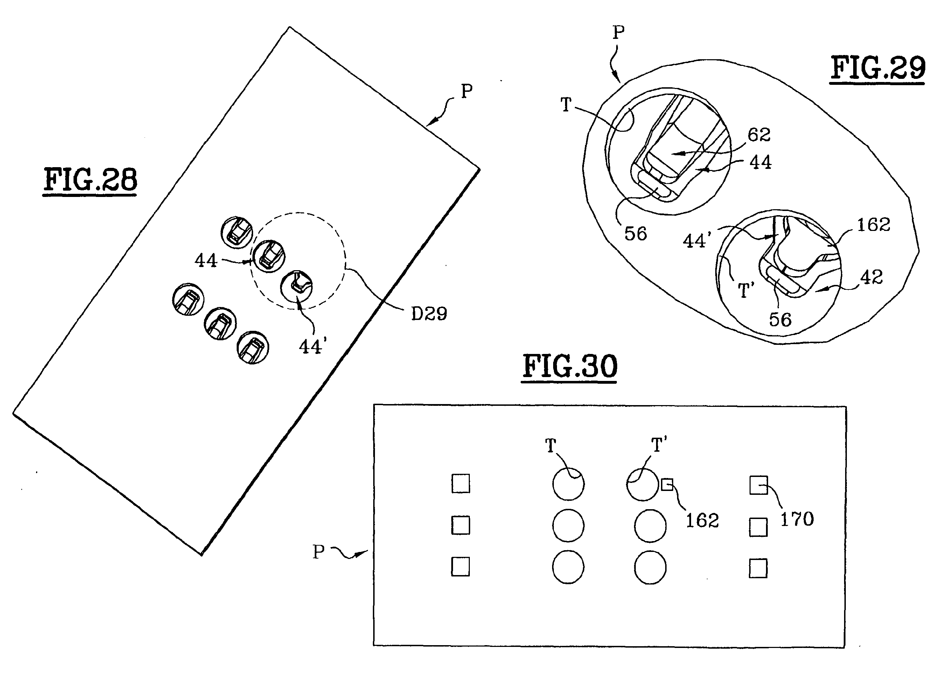

As already mentioned, the flexing of the front end 62 is facilitated by the presence of holes T in the printed-circuit board, the hole T' associated with the contact 44' having larger dimensions, as may be seen in Figures 28 to 30. Also shown in Figure 30 are the conducting pads or tracks 70 to which the rear connection ends 68 are connected.

When the card is inserted vertically, i.e. in a direction approximately perpendicular to its plane and to that of the connector 40, these planes remaining mutually parallel, the switching function for detecting the presence of the card is complemented by an end-of-insertion switching function since it is then possible to ensure a defined sequence at the moment of insertion of the smart card, that is to say that it is certain that firstly the pads on the card come into contact with the ends 62 and then there is a semi-permanent switching contact established between the end 158 of the switching blade 156 and the track 162.

The sequence is determined and reversed when the card is removed vertically.

For industrial standardization reasons, it is possible to generalize the hybrid contact 44' in all the contacts of the connector, even if only one of them is used actually to provide a switching function for detecting the presence of a card, it thus being possible for each user to choose, depending on his application, the position of the contact which actually carries out the switching function.

The resilience of the additional switching branch 156 makes it possible to absorb the variations in height of the working position and any overtravel of the hybrid contact 44'. This results in the free end 158 bearing on the track 162 with a force whose value lies within a range which guarantees stable electrical contact.

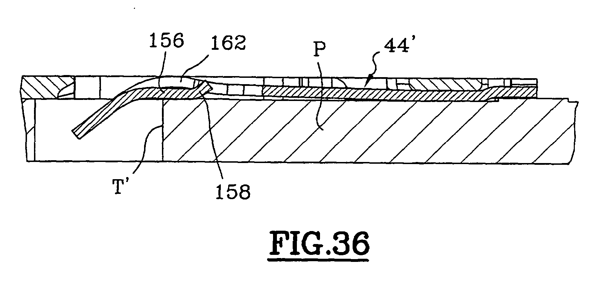

In order to increase the flexing capabilities of the switching blade 156, it is possible to reduce the thickness of the blade 156, as illustrated in Figures 24 to 27 and 36. This thinning, which is obtained by flattening it, for example in order to reduce the thickness from 0.17 mm to 0.12 mm, also makes it possible to improve the mechanical strength of the switching branch because of the local strain-hardening of the metal which results therefrom.

By controlling the flattening operation, the bearing force on this switching contact may be precisely adjusted so that, in particular, it corresponds approximately to the bearing force on the other contacts.

When the smart card is removed, the hybrid contact 44' automatically resumes its rest position illustrated in particular in Figure 24, by virtue of the spring effect of its resilient movable part, the additional resilient switching blade or branch 156 rising and cutting the electrical contact between its end 158 and the track 162.

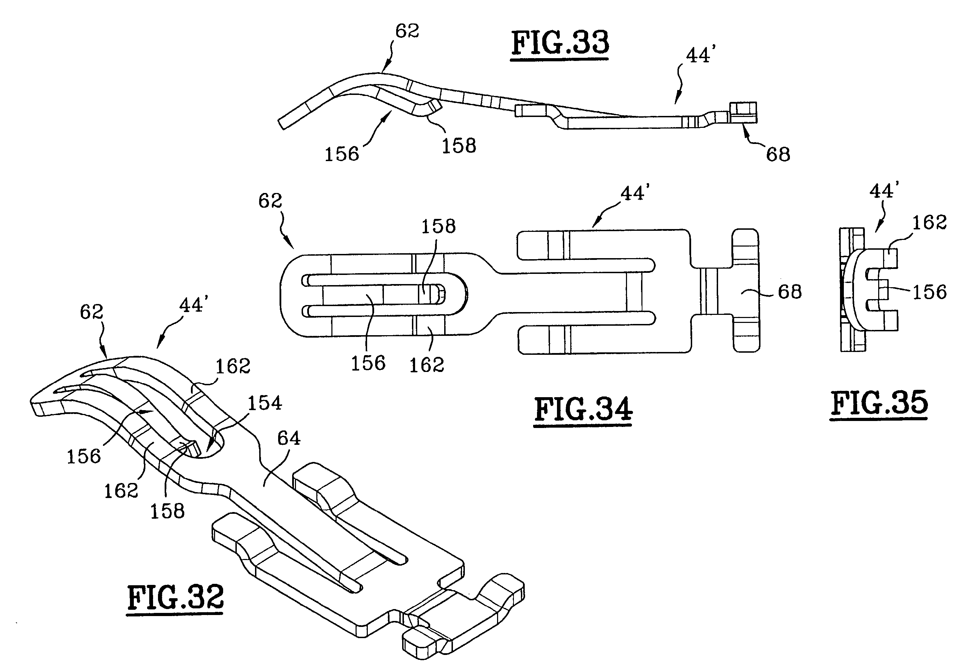

In the alternative embodiment illustrated in Figures 32 to 36, the additional switching blade 156 extends in the slot 154 from the front end edge of the curved part 62, i.e. in the opposite direction to that in the previous alternative embodiment, its operation being in every aspect identical.

## Claims

1. Electrical connector (40) of the type comprising a support (42) made of insulating material produced by moulding, having an upper plane contact face (46) and a plurality of parallel electrical conductors (44) in the form of elastically deformable blades (60) which extend longitudinally and each of which comprises a first, curved front contact end (62) projecting out of the plane of the upper contact face (46) of the support (42) through a longitudinal slot (52) in the support, a middle portion for connecting the blade (60) to the support (42), the front part (64) of said middle portion extending in the slot (52) and the rear part (66) of said middle portion extending in a housing (70) formed in the lower face (48) of the support, and a second, rear connection end (68) of the blade (60) for electrical connection to a circuit carried by a printed circuit board, each blade (60) including, near its rear part (66) of said middle portion, means for fastening the blade (60) to the support (42) which consist of at least one lateral retention tab (82) which extends longitudinally and which is housed in a complementary housing of the support into which the tab is inserted longitudinally from the rear to the front in order to mount the contact blade on the support, wherein the insulating support (42) is a plate, **characterized in that** each blade includes, near its rear connection end (68), further retention tabs (84) extending transversely to the blade (60), and **in that** each free end of the retention tabs (80, 82, 84) has a S-shaped bent portion (88, 116) extending in an associated complementary housing (120) formed in the insulating support by the use of bayonet-type means providing the downward vertical retention and longitudinal positioning of each electrical conductor (44) with respect to the insulating support (42).

2. Electrical connector according to Claim 1, **characterized in that** each lateral retention tab (80) has a front branch (82) and a rear branch (84), the ends (86, 118) of which are each housed in a housing (98, 120) which is open in the upper face (46) of the insulating support (42) and open longitudinally towards the rear and into which housings the branches can be inserted longitudinally towards the front.

3. Electrical connector according to Claim 2, **characterized in that** the front branch (82, 86) of each retention tab (80) extends longitudinally towards the front in the plane of the rear part (66) of the middle connection portion (64) and is then bent upwards so that its front free end (86) extends into the associated housing (98).

4. Electrical connector according to either of Claims 1 and 2, **characterized in that** the front end transverse edge (108) of the front branch (82) of the retention tab (80) engages with a front stop transverse surface (102) of the housing (98).

5. Connector according to any one of Claims 2 to 4, **characterized in that** the rear end transverse edge (110) of the front branch (82) of the retention tab (80) engages with a rear stop transverse surface arranged in a housing (70) formed in the lower face (48) of the insulating and vertically downwardly open support in which the rear part (66) of the middle connection portion (64) of the contact blade (62) and a rear part of the front branch (82) extend.

6. Electrical connector according to any one of Claims 2 to 5, **characterized in that** the rear branch (84, 118) of each retention tab (80) extends transversely in the plane of the rear part (66) of the middle connection portion (64) and is then bent upwards so that its transverse free end (118) extends into the associated complementary housing (120).

7. Electrical connector according to any one of Claims 2 to 6, **characterized in that** the free ends of the front branches (82), which exhibit transverse resilience, of the retention tab are mounted clamped transversely in their associated housings (98).

8. Electrical connector according to any one of the preceding claims, **characterized in that** each electrical conductor (44) has a symmetry of design with respect to a longitudinal mid-plane of the contact blade (60).

9. Connector according to any one of the preceding claims, **characterized in that** the lower face (76) of the rear connection end (68) of each blade (60) lies above the plane of the lower bearing face (48) of the support (42).

10. Electrical connector according to any one of the preceding claims, **characterized in that** one (44') of the electrical conductors has, near the curved front free contact end (62, 162) of its contact blade (60), an additional, switching contact blade (156) which extends longitudinally from the curved contact end and which, in the working position of the contact blade (60), can engage with a conducting track (162) of a printed-circuit board (P) on which the connector (40) is mounted in order to close an electrical switching circuit for detecting the presence of a card in an apparatus equipped with the connector and/or the end of insertion travel of the card.

11. Connector according to the preceding claim, **characterized in that** the free end (158) of the switching blade (156) lies vertically below the upper face of the curved contact end (62).

12. Electrical connector according to the preceding claim, **characterized in that** the front contact end (62) of the contact blade (60) of the said conductor (44') is divided into two parallel strands (162) between which the switching blade (156) extends.

## Patentansprüche

1. Elektrischer Verbinder, mit einer Halterung (42), die aus isolierendem Material besteht und durch Formpressen hergestellt ist und die eine Kontaktseite (46) an der oberen Ebene und die eine Mehrzahl paralleler elektrischer Leiter (44) in Form von elastisch verformbaren Schenkeln (60) aufweist, welche sich in Längsrichtung erstrecken und jeder von ihnen ein erstes kurvenförmiges vorderes Kontaktende (62), welches aus der Ebene der oberen Kontaktseite (46) der Halterung (42) durch einen in der Halterung (42) längslaufenden Schlitz (52) herausragt, einen mittleren Bereich zur Verbindung des Schenkels (60) mit der Halterung (42), wobei der vordere Teil (64) des genannten mittlere Bereiches in den Schlitz (52) hineinragt und der hintere Teil (66) des genannten mittleren Bereiches in eine Aufnahme (70) hineinragt, die in der Unterseite (48) der Halterung ausgebildet ist, und ein zweites, hinteres Kontaktende (68) des Schenkels (60) zur elektrischen Verbindung mit einem auf einer Leiterplatte gehaltenen Schaltkreis, wobei jede Kontaktfeder in der Nähe ihres hinteren Teils (66) des genannten mittleren Bereiches Mittel zur Befestigung des Schenkels (60) an der Halterung (42) aufweist, welche aus mindestens einem lateralen Haltelappen (82) bestehen, der sich in Längsrichtung erstreckt und in einer komplementären Aufnahme der Halterung aufgenommen ist, in welche der Haltelappen in Längsrichtung von hinten nach vorne eingeschoben wird, um die Kontaktfeder an der Halterung anzubringen, aufweist, wobei die isolierende Halterung (42) eine Platte ist, **dadurch gekennzeichnet, dass** jeder Schenkel in der Nähe seines hinteren Kontaktendes (68) weitere Haltelappen (84) besitzt, welche sich schräg zum Schenkel (60) erstrecken und dass jedes freie Ende der Haltelappen (80, 82, 84) einen S-förmigen gebogenen Bereich (88, 116) aufweist, welcher in eine ihm zugeordnete komplementäre Aufnahme (120) hineinragt, welche in der isolierende Halterung ausgebildet ist, wobei bajonettartige Mittel verwendet werden, die für den vertikalen Halt nach unten und die Positionierung in Längsrichtung eines jeden elektrischen Leiters (44) bezüglich der isolierenden Halterung (42) sorgen.

2. Elektrischer Verbinder nach Anspruch 1, **dadurch gekennzeichnet, dass** jeder laterale Haltelappen (80) einen vorderen Abschnitt (82) und einen hinteren Abschnitt (84) aufweist, deren Enden (86, 118) in jeweils einer Aufnahme (98, 120) aufgenommen sind, welche an der Oberseite (46) der isolierenden Halterung (42) sowie längslaufend in Richtung der Rückseite geöffnet ist und in welche die Abschnitte in Längsrichtung zur Vorderseite hin eingeschoben werden können.

3. Elektrischer Verbinder nach Anspruch 2, **dadurch gekennzeichnet, dass** der vordere Abschnitt (82, 86) eines jeden Haltelappens (80) sich längslaufend in der Ebene des hinteren Teils (66) des mittleren Verbindungsbereichs (64) längslaufend in Richtung der Vorderseite erstreckt und dann nach oben gebogen ist, so dass sein vorderes freies Ende (86) in die zugehörige Aufnahme (98) hineinragt.

4. Elektrischer Verbinder nach einem der Ansprüche 1 oder 2, **dadurch gekennzeichnet, dass** die vordere querlaufende freie Kante (108) des vorderen Abschnitts (82) des Haltelappens (80) an einer querlaufenden Anschlagfläche (102) der Aufnahme (98) angreift.

5. Verbinder nach einem der Ansprüche 2 bis 4, **dadurch gekennzeichnet, dass** die hintere querlaufende freie Kante (110) des vorderen Abschnitts (82) des Haltelappens (80) mit einer hinteren quer laufenden Anschlagfläche zusammenwirkt, welche in einer Aufnahme (70) angeordnet ist, die in der Unterseite (48) der isolierenden und vertikal nach unten offenen Halterung gebildet ist, in welche sich der hintere Teil (66) des mittleren Verbindungsbereichs (64) des Kontaktschenkels (62) und ein hinterer Teil des vorderen Abschnitts (82) erstreckt.

6. Elektrischer Verbinder nach einem der Ansprüche 2 bis 5, **dadurch gekennzeichnet, dass** der hintere Abschnitt (84, 118) eines jeden Halterungslappens (80) sich querlaufend in der Ebene der hinteren Seite (66) des mittleren Verbindungsbereiches (64) erstreckt und dann hochgebogen ist, so dass sein querlaufendes freies Ende (118) in seine ihm zugeordnete komplementäre Aufnahme (120) hineinragt.

7. Elektrischer Verbinder nach einem der Ansprüche 2 bis 6, **dadurch gekennzeichnet, dass** die freien Enden der vorderen Abschnitte (82) des Haltelappens, welche eine Federwirkung in querlaufender Richtung aufweisen, in die ihnen zugeordneten Aufnahmen (98) angebracht und eingespannt werden.

8. Elektrischer Verbinder nach einem der vorhergehenden Ansprüche, **dadurch gekennzeichnet, dass** jeder elektrischer Leiter (44) einen symmetrischen Aufbau bezüglich einer längslaufenden Mittelebene des Kontaktschenkels (60) aufweist.

9. Verbinder nach einem der vorhergehenden Ansprüche, **dadurch gekennzeichnet, dass** die Unterseite (76) des hinteren Verbindungsendes (68) eines jeden Schenkels (60) oberhalb der Ebene der unteren tragenden Seite (48) der Halterung (42) liegt.

10. Elektrische Verbinder nach einem der vorhergehenden Ansprüche, **dadurch gekennzeichnet, dass** einer (44') der elektrischen Leiter in Nähe des kurvenförmigen vorderen freien Kontaktendes (62, 162) seines Kontaktschenkels (60) einen zusätzlichen schaltenden Kontaktschenkel (156) aufweist, welcher sich längslaufend vom kurvenförmigen Kontaktende aus erstreckt und in der Arbeitsstellung des Kontaktschenkels (60) mit einer Leiterbahn (162) einer Leiterplatte (P), auf welcher der Verbinder (40) montiert ist, zusammenwirken kann, um einen elektrischen Schaltkreis zu schließen, um die Anwesenheit einer Karte in einer Vorrichtung, die mit dem Verbinder ausgestattet ist, und/oder das Ende der Einführbewegung der Karte zu erkennen.

11. Verbinder nach dem vorhergehenden Anspruch, **dadurch gekennzeichnet, dass** das freie Ende (158) des schaltenden Schenkels (156) vertikal unterhalb der Oberseite des kurvenförmigen Kontaktendes (62) liegt.

12. Elektrischer Verbinder nach dem vorhergehenden Anspruch, **dadurch gekennzeichnet, dass** das vordere Kontaktende (62) des Kontaktschenkels (60) des genannten Leiters (44') in zwei parallele Stränge (162) aufgeteilt ist, zwischen denen sich der schaltende Schenkel (156) erstreckt.

## Revendications

1. Connecteur électrique (40) du type comportant un support (42) en matériau isolant réalisé par moulage présentant une face plane supérieure de contact (46) et une pluralité de conducteurs électriques parallèles (44) en forme de lames (60) déformables élastiquement qui s'étendent longitudinalement et dont chacune comprend une première extrémité avant incurvée de contact (62) faisant saillie hors du plan de la face supérieure de contact (46) du support (42) à travers une fente longitudinale (52) du support, une portion médiane de liaison de la lame (60) au support (42), la partie avant (64) de ladite portion médiane s'étendant dans la fente (52) et la partie arrière (66) de ladite portion médiane s'étendant dans un logement (70) formé dans la face inférieure (48) du support, et une seconde extrémité arrière (68) de raccordement de la lame (60) pour être raccordée électriquement à un circuit porté par une plaque à circuit imprimé, chaque lame (60) comportant, au voisinage de sa partie arrière (66) de ladite portion intermédiaire, des moyens de fixation de la lame (60) au support (42) qui sont constitués par au moins une patte latérale de rétention (82) qui s'étend parallèlement à la partie médiane de liaison (64), et qui est reçue dans un logement complémentaire du support dans lequel le support isolant (42) est une plaque, **caractérisé en ce que** chaque lame comporte, au voisinage de son extrémité arrière de raccordement (68), des pattes de rétention (84) supplémentaires qui s'étendent transversalement à la lame (60), et **en ce que** chaque extrémité libre des pattes de rétention (80, 82, 84) comporte une portion courbée (86, 116) en forme de S, s'étendant dans un logement complémentaire associé (120) formé dans le support isolant par l'intermédiaire de moyens du type à baïonnette qui provoque la position longitudinale et verticale de rétention vers l'avant de chaque conducteur électrique (44) par rapport au support isolant (42).

2. Connecteur électrique selon la revendication 1, **caractérisé en ce que** chaque patte latérale de rétention (80) comporte une branche avant (82) et une branche arrière (84) dont les extrémités (86, 118) sont chacune reçue dans un logement (98, 120) ouvert dans la face supérieure (46) du support isolant (42) et ouvert longitudinalement vers l'arrière et dans lesquels elles sont susceptibles d'êtres introduites longitudinalement vers l'avant.

3. Connecteur électrique selon la revendication 2, **caractérisé en ce que** la branche avant (82, 86) de chaque patte de rétention (80) s'étend longitudinalement vers l'avant dans le plan de la partie arrière (66) de la portion médiane de liaison (64) puis est coudée vers le haut de manière que son extrémité libre avant (86) s'étende à l'intérieur du logement associé (98).

4. Connecteur électrique selon l'une quelconque des revendications 1 à 2, **caractérisé en ce que** le bord transversal d'extrémité avant (108) de la branche avant (82) de la patte de rétention (80) coopère avec une surface transversale de butée avant (102) du logement (98).

5. Connecteur selon l'une quelconque des revendications 2 à 4, **caractérisé en ce que** le bord transversal d'extrémité arrière (110) de la branche avant (82) de la patte de rétention (80) coopère avec une surface transversale de butée arrière agencée dans un logement (70) formé dans la face inférieure (48) du support isolant et ouvert verticalement vers le bas dans lequel s'étend la partie arrière (66) de la portion médiane de liaison (64) de la lame de contact (62) et une partie arrière de la branche avant (82).

6. Connecteur électrique selon l'une quelconque des revendications 2 à 5, **caractérisé en ce que** la branche arrière (84, 118) de chaque patte de rétention (80) s'étend transversalement dans le plan de la partie arrière (66) de la portion médiane de liaison (64) puis est coudée vers le haut de manière que son extrémité libre transversale (118) s'étende à l'intérieur du logement complémentaire associé (120).

7. Connecteur électrique selon l'une quelconque des revendications 2 à 6, **caractérisé en ce que** les extrémités libres des branches avant (82), qui présentent une élasticité transversale, de la patte de rétention sont montées serrées transversalement dans leurs logements associés (98).

8. Connecteur électrique selon l'une quelconque des revendications précédentes, **caractérisé en ce que** chaque conducteur électrique (44) présente une symétrie de conception par rapport à un plan longitudinal médian de la lame de contact (60).

9. Connecteur selon l'une quelconque des revendications précédentes, **caractérisé en ce que** la face inférieure (76) de l'extrémité arrière (68) de raccordement de chaque lame (60) est située au dessus du plan de la face inférieure (48) d'appui du support (42).

10. Connecteur électrique selon l'une quelconque des revendications précédentes, **caractérisé en ce que** l'un (44') des conducteurs électriques comporte, au voisinage de l'extrémité libre avant incurvée de contact (62, 162) de sa lame de contact (60) une lame de contact supplémentaire de commutation (156) qui s'étend longitudinalement à partir de l'extrémité incurvée de contact et qui, en position de travail de la lame de contact (60), est susceptible de coopérer avec une piste conductrice (162) d'une plaque à circuit imprimé (P) sur laquelle est montée le connecteur (40) pour fermer un circuit électrique de commutation pour détecter le présence d'une carte dans un dispositif équipé du connecteur et/ou la fin de course de mise en place de la carte.

11. Connecteur selon la revendication précédente, **caractérisé en ce que** l'extrémité libre (158) de la lame de commutation (156) est située verticalement en dessous de la face supérieure de l'extrémité incurvée de contact (62).

12. Connecteur électrique selon la revendication précédente, **caractérisé en ce que** l'extrémité avant de contact (62) de la lame de contact (60) dudit conducteur (44') est dédoublée en deux brins parallèles (162) entre lesquels s'étend la lame de commutation (156).
